# EUROPEAN PATENT SPECIFICATION

(11) **EP 3 078 075 B1**
(45) Date of publication and mention of the grant of the patent: **27.09.2017**
(21) Application number: 14827850.0
(22) Date of filing: 02.12.2014
(51) Int. Cl.: H01P 1/213, H03H 7/46, H03H 9/46, H04W 88/08, H01Q 1/24, H04B 1/00, H04W 24/00, H04B 1/401

(54) **ANTENNA MULTIPLEXING APPARATUS WITH BYPASS PATHS AND METHOD OF USE THEREOF**
MULTIPLEXVORRICHTUNG UND VERFAHREN ZUR VERWENDUNG DAVON
APPAREIL DE MULTIPLEXAGE ET PROCÉDÉ D'UTILISATION DUDIT APPAREIL

(30) Priority: 03.12.2013 GB 201321298
(43) Date of publication of application: 12.10.2016
(73) Proprietor: Radio Design Limited, West Yorkshire BD17 7DW (GB)
(72) Inventor: LUCAS, Casper, Shipley, West Yorkshire BD17 7DW (GB)
(74) Representative: Tomkinson, Alexandra
(86) International application number: PCT/GB2014/053575
(87) International publication number: WO 2015/082903

(56) References cited:
- US-A1- 2002 132 644
- US-A1- 2006 183 420
- US-A1- 2007 133 828
- US-A1- 2007 161 348
- US-A1- 2009 108 854
- US-A1- 2009 316 609
- US-A1- 2010 113 097
- US-A1- 2011 128 019
- US-A1- 2012 038 513
- US-A1- 2013 286 523
- US-B1- 8 135 086

## Description

This invention relates to multiplexing apparatus and to a method of use thereof, and particularly to multiplexing apparatus of a type for combining and/or splitting radio frequency signals.

Mobile phone operators seek to minimise the capital expenditure (capex) required to build a wireless network as well as minimise the ongoing operating expenditure (opex). If an operator provides both 2G (2^{nd} generation mobile communication) and 3G (3^{rd} generation mobile communication) wireless network services then a way to reduce opex is for the two networks to share a cell site. However, the sharing of cell sites typically results in complex logistics relating to the installation of the cell sites.

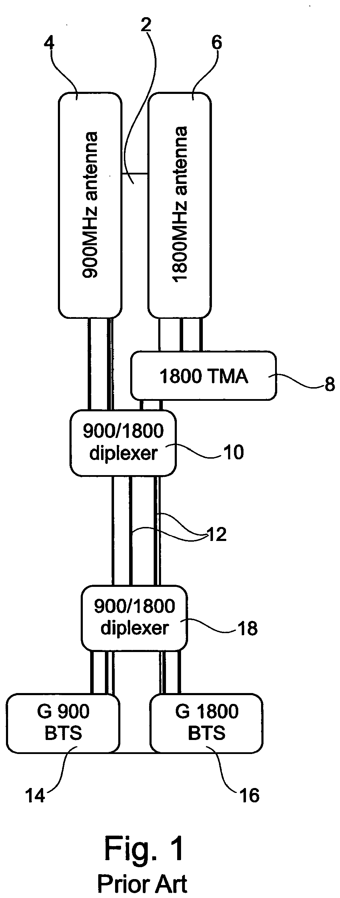

An example of a typical cell site arrangement, forming part of a wireless telecommunications network, in which two different wireless technology service networks share the same site, is shown in figure 1. In this example the 2G and 3G services of a particular operator share the same mast. The 2G and 3G services are in different frequency operating bands (for example 900MHz and 1800MHz respectively). Combiner or multiplexer apparatus is provided to allow combining and/or splitting of RF signals so that equipment on the mast can be shared. Thus, the cell site includes a mast 2, at the top of which is mounted a 900MHz antenna 4 for transmitting and/or receiving one or more radio frequency signals in the 900MHz frequency band, and a 1800MHz antenna 6 for transmitting and/or receiving one or more radio frequency signals in the 1800MHz frequency band. A tower mounted amplifier (TMA) 8 for amplifying the received radio frequency signals can optionally be connected to the 1800MHz antenna, and it will be appreciated that a TMA could also be optionally connected to the 900MHz antenna if required. Multiplexing apparatus in the form of a diplexer 10 is provided to allow combining of the RF signals being received by the 900MHz and 1800MHz antennae 4, 6 for passage down common feeder cables 12, and for splitting of the RF signals being transmitted from a 900MHz base station (BTS) 14 and a 1800MHz base station (BTS) 16 located at the base of mast 2. Diplexer apparatus 18 is provided at the base of mast 2 to allow combining of the RF signals transmitted from the 900MHz base station 14 and the 1800MHz base station 16, and for splitting of the 900MHz and 1800MHz RF signals being received from common feeder cables 12. Each BTS 14, 16 typically includes a transceiver that generates one or more radio frequency signals for transmission to a mobile phone unit via the antennae 4, 6, as well as receiving one or more radio frequency signals from a mobile phone unit via antennae 4, 6.

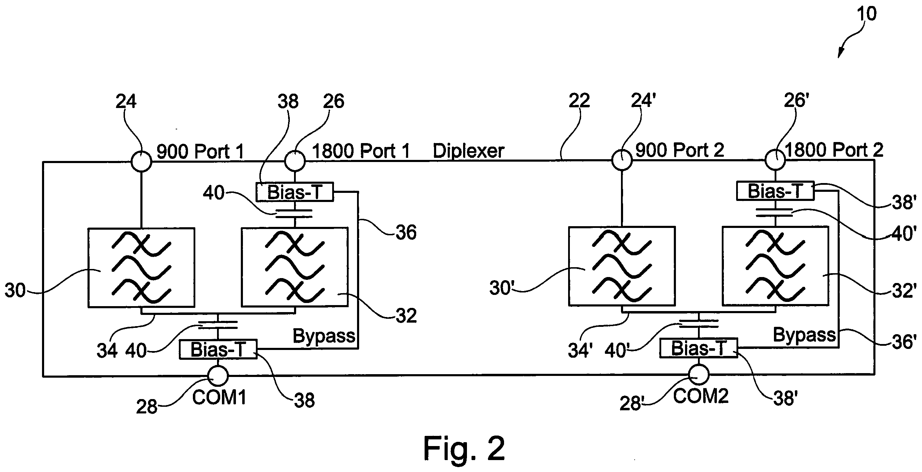

Figure 2 is a detailed circuit diagram showing the filter arrangement of a conventional diplexer unit 10. The unit 10 typically comprises a housing 22 having a 900MHz antenna channel port 24 for connection to 900MHz antenna 4 and a 1800MHz antenna channel port 26 for connection to TMA 8. In the illustrated example the unit 10 is provided as a dual unit, in that there is a mirror image of the components within the unit, with a second 900MHz antenna channel port 24' and a second 1800MHz antenna channel port 26'. Common ports 28, 28' are provided for transmitting and/or receiving the combined 1800MHz and 900MHz along the common feeder cables 12.

Diplexer Unit 10 includes 900MHz filters 30, 30' provided between 900MHz channel ports 24, 24' and common ports 28, 28' for allowing the passage of transmit and/or receive RF signals in the 900MHz frequency band, but for substantially preventing passage of transmit and/or receive RF signals at any other frequency. Unit 10 includes 1800MHz filters 32, 32' provided between 1800MHz channel ports 26, 26' and common ports 28, 28' for allowing the passage of transmit and/or receive RF signals in the 1800MHz frequency band, but for substantially preventing passage of transmit and/or receive RF signals at any other frequency. The ends 34, 34' of filters 30, 32 and 30', 32' are multiplexed together to provide a common signal path connected to common port 28, 28'.

Conventional diplexer unit 10 typically comprises a direct current (DC) and low frequency (typically below 15MHz) control signal bypass path 36, 36'. This allows DC current and low frequency control signals used to power and control RF equipment at the top of the mast respectively, such as TMAs or motorised antenna position equipment (i.e. Remote Electrical Tilt (RET) motors), to bypass filters 30, 32, 30', 32' and be received by the RF equipment. The low frequency control signals are often referred to as Antenna Interface Standards Group (AISG) control signals and relate to standard based control signals for digital remote control and monitoring of antenna line devices in wireless communication systems. Bias T's 38, 38' are provided at either side of 1800MHz filters 32, 32' in the illustrated example to allow DC and low frequency signals to be transmitted to the TMA 8 in the 1800MHz frequency path via bypass path 36, 36'. DC blocks in the form of capacitors 40, 40' are provided between the Bias T's 38, 38' and the filters 32, 32' to prevent DC and low frequency signals entering the 1800MHz RF filter 32, 32' as they may provide a DC short circuit and/or damage the same.

The diplexer unit 18 located at the base of the mast is typically the same as diplexer unit 10 located at the top of the mast but in reverse (i.e. the common connection port is at the output side of the diplexer unit and the 900MHz and 1800MHz channel connection ports are at the input side of the unit when in a transmission direction).

The DC and low frequency signal bypass paths 36, 36' are typically hardwired and this generates a logistical problem due to the large number of variables and requirements for which paths in the cell site need to be connected. For example, both the 900MHz and 1800MHz may have equipment on the mast that requires DC power and/or low frequency control signals, only one of the 900MHz or 1800MHZ RF signal paths may need DC and/or low frequency control signals, or the requirements of the mast could change over time due to changes in the customer requirements of RF equipment used on the mast. As such, a large number of parts need to be carried by the cell site installer to be able to meet the specific customer requirements at the cell site and, due to the complexity of the wiring, it is common for cell site installers to fit incorrect multiplexing equipment on site and/or to incorrectly wire the equipment together. This results in delays to the installation of the cell site and deployment of the mobile network and typically results in increased costs to the customer and/or installation company.

US2010/0113097 discloses an antenna transmission control device having a base station side and an antenna-side multiplexer circuit. There is an alternating protocol transfer between the two multiplexer circuits to control components close to the antenna. The current alarmed or protocol alarmed signals present at the antenna side terminals of the multiplexer provided on the antenna side can be measured or detected by the multiplexer circuits and supplied to the transmission link with a terminal dependent or load dependent protocol.

US8135086 discloses combining and separation circuitry which allows multiple signals in different frequency bands to travel in either direction over a single cable and be combined or separated as required.

US2007/0161348 discloses a method of operating a cellular base station subsystem, such as a smart bias tee. The method comprises modulating a first control data signal to generate a first modulated carrier signal; multiplexing the first modulated carrier signal with a first RF antenna signal onto a feed line; demultiplexing a second RF antenna signal and a second modulated carrier signal from said feed line; demodulating the second modulated carrier signal to generate a second control data signal; analysing at least one of said signals to generate diagnostic data; and outputting said data.

US2002/132644 discloses a method and apparatus for transmitting a communication signal between a radio base station and a radiation element. A data signal is extracted from an input signal. The data signal includes values representing operating parameters of devices in the radiation element. A status signal is produced for each device that stimulates a feedback signal for the device.

US2006/0183420 discloses a wireless distribution system. Detectors are operatively connected to one or more of a plurality of input ports of an expansion unit to determine the presence of information carrying signals at the input ports. A number of selection circuits are provided to select signals in which information has been detected.

US2009/316609 discloses a system and method for synchronized time division duplex signal switching. The system comprises first and second units operable for receiving first and second radio frequency signals. The first unit communicates a control signal to the second unit, based at least in part on detecting when a first original radio frequency signal is being received by the first unit. The second unit uses the control signal to determine when to output a first reproduced radio frequency signal in accordance with time division duplexing.

US2012/0038513 discloses a centralized antenna interface for wireless networks. A server includes a user interface configured to establish a communication connection between the antenna interface system and the user of the access device. The server includes one or more antenna control programs which, when executed, provide command signals. A second network connection establishes a communication connection between the server and converters that transmit the command signals from the server to the antennas. The command signals are used for making adjustments to and gathering information for antenna parameters.

US2009/0108854 discloses a device and method for identifying an accessory device connected to first and second ports of an electronic device by determining an impedance of the accessory device across the first port and the second port.

US2013/0286523 discloses a system that detects electrical disconnection of one connector from another connector and includes detection circuitry and protection circuitry. The protection circuitry lowers or terminates power being supplied to a host device on detection of electrical disconnection.

US2011/0128019 discloses a method and circuitry for identifying whether a headphone plug or a line output plug is inserted into a dual use jack of an electronic device. The determination is made based on a load resistance of the plug connected to the jack.

US2007/0133828 discloses a plug in detection module including an impedance network for producing a plug-in signal in response to a supply signal that varies when one of a plurality of plug-in receptors is coupled to a plug connector and when it is decoupled.

It is therefore an aim of the present invention to provide multiplexing apparatus that overcomes the abovementioned problems.

It is a further aim of the present invention to provide a method of using multiplexing apparatus that overcomes the abovementioned problems.

According to a first aspect of the present invention there is provided multiplexing apparatus according to claim 1.

Thus, the present invention provides a control means or mechanism for multiplexing apparatus which automatically determines whether a bypass path of the apparatus can be enabled (switched on) or disabled (switched off) based on detection and/or measurement of one or more electrical values at or associated with a channel and/or common connection port. The automated determination of bypass path enablement and/or disablement by the apparatus prevents an installer from making an incorrect connection with the multiplexing apparatus and prevents the time delays and expense associated with installation mistakes in the field.

The at least one bypass path is provided to bypass at least part of the one or more RF paths connected between a common connection port and a channel connection port.

In one embodiment a common connection port can be defined as an input and/or an output connection port on the apparatus through which two or more combined RF frequencies or frequency ranges can pass. A channel connection port can be defined as an input and/or an output connection port on the apparatus through which a non-combined or single RF frequency or frequency range passes.

In one embodiment a common connection port can be defined as a port that all signals passing through a single multiplex apparatus pass through, and a channel connection port can be defined as a port where only a sub-set of the signals pass through. The sub-set of signals is typically differentiated on the basis of signal frequency.

In one embodiment the channel connection ports comprise first and at least second channel connection ports for allowing the transmission and/or receiving of one or more RF signals at a first frequency or frequency range and at least a second frequency or frequency range respectively. The common connection port allows the transmission and/or receiving of one or more RF signals at any or all of said first and at least second radio frequencies or frequency ranges in use.

Preferably the first radio frequency or frequency range is different, or preferably significantly different, to the at least second radio frequency or frequency range. In one example, the term significantly different means a frequency or frequency range that is non-adjacent or non-overlapping to another frequency or frequency range. The term frequency range can include a set of non-contiguous frequencies in one example.

Preferably a first RF pathway is provided in the apparatus between the first channel connection port and the common connection port for the transmission and/or receiving of one or more RF signals at the or a first RF frequency or frequency range.

Preferably at least a second RF pathway is provided in the apparatus between the at least second channel connection port and the common connection port for the transmission and/or receiving of one or more RF signals at the or at least a second RF frequency or frequency range.

In one embodiment one or more RF filters are provided in the first RF pathway for allowing passage of one or more RF signals at the first RF frequency or frequency range therethrough, but preventing or substantially preventing the passage of one or more RF signals at the at least second RF frequency and/or other RF frequencies or frequency ranges.

In one embodiment one or more RF filters are provided in the at least second RF pathway for allowing passage of one or more RF signals at the at least second RF frequency or frequency range therethrough, but preventing or substantially preventing the passage of one or more RF signals at the first and/or other RF frequencies or frequency ranges.

Preferably a bypass path is provided in the first and/or at least second RF pathway to bypass at least one or more RF filters in said pathway.

Preferably multiplexing means or connections are provided between the first and at least second channel connection ports and the common connection port in the first and/or at least second RF pathways for separating out and/or combining one or more RF signals at the first and at least second RF frequencies or frequency ranges.

According to one embodiment of the present invention there is provided multiplexing apparatus, said multiplexing apparatus including first and at least second radio frequency (RF) channel connection ports for allowing the transmission and/or receiving of one or more RF signals at a first frequency or frequency range and at least a second frequency or frequency range respectively, said first frequency or frequency range different to said at least second frequency or frequency range; at least one common connection port for the transmission and/or receiving of one or more RF signals at any or all of said first and at least second radio frequencies or frequency ranges; a first RF pathway between said first RF channel connection port and the common connection port for the transmission and/or receiving of said one or more RF signals at said first frequency or frequency range; at least a second RF pathway between said at least second RF channel connection port and the common connection port for the transmission and/or receiving of said one or more RF signals at said at least second frequency or frequency range; and multiplexing means provided between the first and at least second RF channel connection ports and the at least one common connection port for separating out and/or combining RF signals at said first and at least second radio frequencies or frequency ranges; at least one of said first and at least second RF pathways having a bypass path for the transmission and/or receiving of DC power and/or one or more control signals therealong, characterised in that control means are provided in or associated with the apparatus to allow detection and/or measurement of one or more electrical values at or associated with one or more of any of the channel or common connection ports and to control whether the bypass path or paths are enabled and/or disabled according to the one or more electrical values detected.

Preferably the control means of the multiplexing apparatus allows the apparatus to determine what types of connections have been made at one or more of the common and/or channel connection ports. As such, the control means can detect (in order to determine the type of connections) where the apparatus has been fitted in a radio frequency cell site arrangement, what equipment the apparatus has been fitted to, what mode the apparatus needs to function in (i.e. a multiplexing mode or a de-multiplexing mode) and/or the like. For example, if the apparatus is fitted at a base of a mobile phone mast, it typically has a plurality of channel connection ports connected to one or more base stations (BTSs) and a common connection port for connection to a common feeder cable for transmission of one or more RF signals up and/or down the mast. If the apparatus is fitted towards a top of a mobile phone mast, it typically has a common connection port connected to a common feeder cable and a plurality of channel connection ports for connection to one or more antennae, TMAs, RETs and/or the like. The control means can determine which orientation the apparatus is acting in and therefore whether the apparatus needs to act in a multiplexing mode in a particular receive or transmit direction (i.e. mode to combine two or more RF signal paths together on a common feed path) and/or a de-multiplexing mode in a particular receive or transmit direction (i.e. mode to separate two or more signal paths out from a common feed into two separate RF signal paths). The mode of operation of the apparatus will obviously depend on whether it relates to one or more transmitted signals or one or more receive signals. It is to be noted that the multiplexing apparatus can operate in both modes at the same time if transmitting and receiving signals simultaneously.

Thus, in one embodiment the multiplexing apparatus can be capable of operation in either a RF multiplexing mode with regard to a transmission direction, wherein one or more transmitted and/or received RF signals are arranged to pass through the apparatus between or from a plurality of channel connection ports to a single or common output connection port; a RF de-multiplexing mode with regard to a transmission direction, wherein one or more transmitted and/or received RF signals are arranged to pass through or from the apparatus between a single or common input connection port to a plurality of channel connection ports; or can be capable of operation in either a RF multiplexing mode or a RF de-multiplexing mode, with the mode of operation determined by the apparatus.

In one embodiment the control means is able to determine which RF operational mode the apparatus is operating in, the type of connection means, the location of fitting of the apparatus in the cell site arrangement, the equipment the apparatus has been fitted to and/or the like and the control means then enables and/or disables one or more bypass paths in the apparatus according to the detected operational mode and/or other detected status. Thus, the apparatus of the present invention in one example can determine whether it has been connected at a base of a mast of a cell site between a plurality of BTSs and a common feeder cable, or it can determine whether it has been connected at a top of a mast of a cell site between a common feeder cable and one or more antenna and/or one or more other power consuming items of apparatus.

In the former example, when the apparatus is operating in a RF multiplexing operational mode in a transmission direction, typically only one of the plurality of channel connection ports needs to supply DC power and/or one or more control signals through the apparatus. As such, the control means selects one bypass path connected between a channel connection port and a common connection port for the supply of DC and control signals and enables this bypass path. The control means disables one or more other bypass paths in the apparatus.

Preferably once the control means has detected one or more electrical values, the orientation, position, type of connection, the equipment fitted to the apparatus and/or mode of operation of the apparatus, the control means switches the bypass path into an enabled and/or disabled position and the bypass path remains in said enabled and/or disabled position permanently and/or until further intervention by a user is undertaken to change the operational mode, operational status, one or more electrical values, type of connections, the equipment fitted to the apparatus and/or the like of the apparatus and thus the enablement of one or more bypass paths in the apparatus.

The control means determines the RF mode of operation and/or the orientation of the apparatus by detecting which of the common and/or channel connection ports is initially powered (i.e. the control means detects whether DC, voltage or an electrical value is present at the connection port). If the common connection port is found to be powered, the control means can determine that the apparatus is orientated in a de-multiplexing mode in a transmission direction or is positioned at the top of the mast of a cell site arrangement (i.e. is receiving power from a common feeder cable). If one or more of the channel connection ports are found to be powered, the control means can determine that the apparatus is orientated in a multiplexing mode in a transmission direction or is positioned at the base of the mast (i.e. is receiving power from one or more BTSs).

If DC, voltage or one or more electrical values is detected at a plurality of channel connection ports during an initial operational mode set up procedure of the apparatus on site in use, typically only one of the channel connection ports is selected as the DC power source and/or control signal or AISG control signal source. This selection is preferably based on the control means identifying the channel connection port with the highest priority based on a pre-defined set of rules. The bypass path associated with the selected port is then typically enabled and the bypass paths associated with the other non-selected ports are disabled.

Preferably each channel connection port on the apparatus is provided with a pre-defined priority or rule associated with the same such that when the control means detects DC, voltage or electrical value at a plurality of channel connection ports, it can identify which channel connection port has the highest priority and thus which channel port should be used as the DC power source and/or control signal source.

Preferably the control signals are AISG control signals.

In one embodiment, if one or more bypass paths are enabled or switched on, DC power and/or one or more control signals can pass through the channel and common connection ports between which the one or more bypass paths are connected. If one or more bypass paths are disabled or switched off, DC power and/or one or more control signals are prevented from being passed through the channel and common connection ports between which the one or more bypass paths are connected.

Preferably the control means are provided in or are associated with the one or more bypass pathways.

The one or more electrical values being detected and/or measured by the control means can include any or any combination of electrical current, DC, voltage, electrical impedance, electrical resistance and/or the like.

Preferably the control means controls enablement and/or disablement of one or more bypass paths in the apparatus when an electrical value is measured at an associated common and/or channel connection port (i.e. at a common and/or channel connection port with which the bypass path is connected) above or below a pre-determined threshold value.

In one embodiment the control means disables one or more bypass paths if a short circuit is detected at one or more associated channel and/or common connection ports (i.e. at a channel and/or common connection port with which the bypass path is connected). The detection of a short circuit typically means that an antenna is connected directly to a channel connection port and no DC power and/or control signals should be supplied through the channel connection port (i.e. the DC and control signal bypass path is disabled for that associated port).

If an electrical impedance above a pre-determined threshold value is measured at a channel connection port via the control means, the control means enables the bypass path associated with that channel connection port. Detection of an electrical impedance above a pre-determined threshold value typically means that an item of electrical equipment requiring a power source and/or control signals is connected to the channel connection port. As such, the control means enables the bypass path, thereby allowing DC and/or control signals to pass through the channel connection port.

In one embodiment the control means includes one or more electrical switches which can be moved between an "on" condition to enable a bypass path, and an "off" condition to disable a bypass path.

Preferably the apparatus has a plurality of bypass paths and two or more of the bypass paths each have one or more electrical switches associated with the same to allow the bypass paths to be moved to or between disabled and enabled conditions.

Preferably the plurality of electrical switches are provided in parallel in the electrical circuitry of the control means.

In one embodiment lightning strike protection means or mechanism can be provided on or associated with the one or more electrical switches and/or control means circuitry to switch the bypass path off in the event of the apparatus being hit by lightning.

In one embodiment each channel and/or common connection port has or employs a mechanism to determine whether the electrical impedance of an external system or apparatus (i.e. cell site apparatus external to the multiplexing apparatus) is within a pre-determined range. If a channel and/or common connection port is to be used as an output port then it is necessary to ascertain the electrical impedance of the external system before the port is enabled for output. For example, during a checking phase of the control means operation, the control means switches a (relatively small, such as approximately 1-50mA and preferably 10mA) constant current source to the connection port and the voltage at the port is monitored. The level of the detected voltage is indicative of the impedance of the external system or apparatus and can be used by a port detection algorithm to decide whether the bypass path associated with that port can be enabled.

Preferably the control means includes microprocessing means, electric circuitry and/or memory means to provide processing, control and/or storage of pre-determined data.

According to one aspect of the present invention there is provided a method of using multiplexing apparatus according to claim 15. An embodiment of the present invention will now be described with reference to the accompanying figures, wherein:
Figure 1 (PRIOR ART) an example of a typical prior art cell site arrangement forming part of a wireless communication system;
Figure 2 (PRIOR ART) is a simplified block diagram showing the conventional multiplexing apparatus in figure 1;
Figure 3 is a simplified block diagram showing multiplexing apparatus according to an embodiment of the present invention;
Figure 4 is a simplified block diagram showing the electric circuitry used in the control mechanism of multiplexing apparatus when located at a top of a mast and operating in a RF de-multiplexing mode in a transmission direction in one embodiment;
Figure 5 is a simplified state diagram showing the decision making process when the multiplexing apparatus is determining it's orientation, location in the cell site and/or mode of operation;
Figure 6 is a priority table showing an example of how the control means of the multiplexing apparatus determines which channel connection port is assigned to be the port for DC and/or control signal transmission when operating in a RF multiplexing mode in a transmission direction in one embodiment;
Figure 7 is a simplified view showing some examples of how the multiplexing apparatus of the present invention could be deployed;
Figure 8 is a more detailed block diagram of short circuit detection means for determining whether an electrical switch in a bypass path is enabled or disabled; and
Figure 9 is a simplified block diagram showing the circuitry used in the control mechanism of multiplexing apparatus when located at a base of the mast or when operating in a multiplexing mode in a transmission direction.

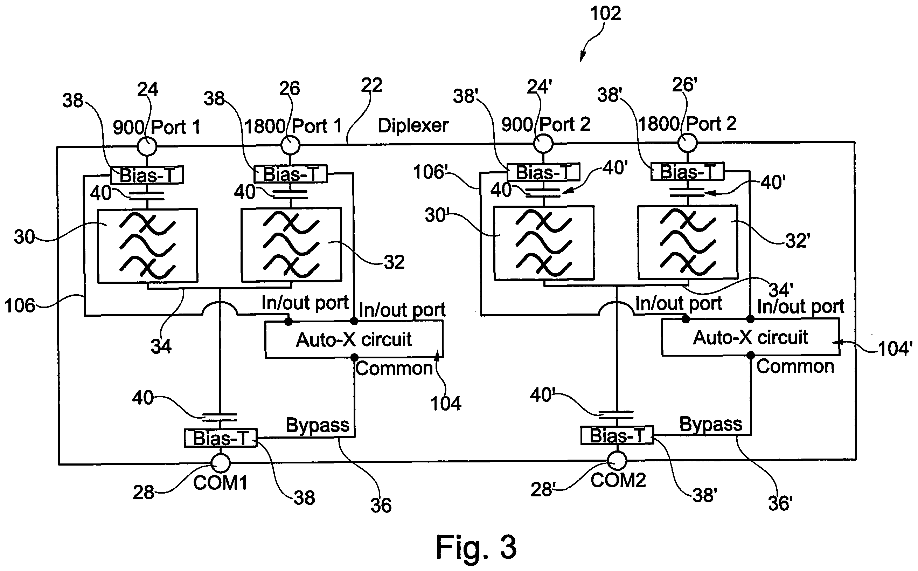

Referring to figure 3, there is illustrated multiplexing apparatus in the form of a diplexer 102 according to an embodiment of the present invention. The multiplexing apparatus is provided with control means 104, 104' in bypass paths 36, 36' 106, 106' of the 900MHz and 1800MHz RF paths respectively, for allowing automatic detection of a power requiring item connected to a channel connection port of the diplexer and for controlling whether the bypass path associated with the channel connection port is enabled and/or disabled according to a detection outcome. This invention greatly simplifies the logistics associated with correct installation of equipment at cell sites where there may be a large number of possible arrangements of equipment that an installer may have to consider.

The same reference numerals have been used to describe the same features referred to in figures 1 and 2. The diplexing apparatus described below can form part of a cell site arrangement previously described in place of a conventional diplexing or multiplexing apparatus.

In diplexer 102, DC and AISG control signal bypass paths are associated with both the 900MHz RF path and the 1800MHz RF path; the 900MHz RF path having 900MHz filters 30, 30' and the 1800MHz RF path having 1800MHz filters 32, 32'. The bypass paths 36, 36', 106, 106' are capable of bypassing the filters 32, 32', 30, 30' in the respective RF paths in use. The control means 104, 104' comprises suitable control circuitry and is located in the DC/AISG bypass paths of both the 900MHz filters and the 1800MHz filters. The Bias-T's 38, 38' and capacitors 40, 40' in the 1800MHz bypass path are as previously described. Thus, in the present invention a DC and AISG control signal bypass path 106, 106' is also included between the 900MHz channel connection port 24, 24' and the common connection port 28, 28'. A Bias-T 38, 38' is provided between 900MHz channel connection port 24, 24' and 900MHz filter 30, 30' and a further Bias-T 38, 38' is provided between 900MHz filter 30, 30' and common connection port 28, 28'. Capacitors 40, 40' are provided between each Bias-T 38, 38' and the 900MHz filter 30, 30' to prevent DC from passing through the filter 30, 30'. Each Bias-T 38, 38' is connected to the control means 104, 104'.

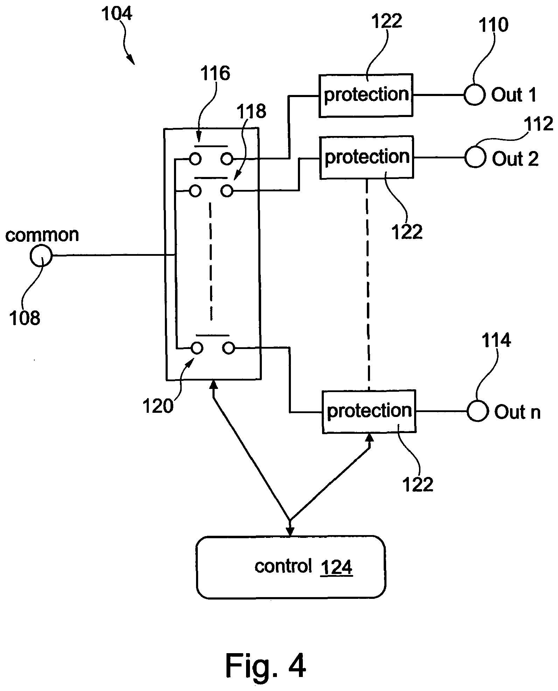

Figure 4 is a simplified block diagram showing the circuitry used in the control means when the multiplexing apparatus is operating in a RF de-multiplexing mode in a transmission direction or is located at the top of a mast. A common connection port 108 is shown and channel connection ports 110, 112 and 114 are shown. Channel connection ports 110, 112 typically represent the 900MHz and 1800MHz connection ports in figure 3, and channel connection port 114 shows that any number of channel connection ports can be provided as represented by the integer 'n'. A parallel arrangement of electrical switches 116, 118, 120 is provided in the control circuitry for enabling (switching on) and/or disabling (switching off) the DC power and AISG control signal path between the common connection port 108 and each of the channel connection ports 110, 112, 114 in the bypass path. Lighting strike protection means 122 is provided between each switch 116, 118, 120 and the channel connection ports 110, 112, 114 respectively.

Micro-processing means or other suitable electric circuitry 124 is provided to measure and/or detect the electrical impedance at each of the channel connection ports 110, 112, 114 and, if electrical impedance is detected above a pre-determined threshold at any channel connection port, this actuates the corresponding electrical switch 116, 118, 120 and moves it from an open position (non-actuated, disabled or 'off' position) to a closed position (actuated, enabled or 'on' position), wherein DC and AISG control signals can pass from common port 108 to the appropriate channel connection port along the bypass path.

The detection of electrical impedance above a pre-determined threshold value at any channel connection port shows that an item of equipment, such as a TMA or RET motor, is connected between the diplexer apparatus and the antenna that requires a DC power source and control signals to be supplied from a BTS at the base of the mast. If the electrical impedance detected is below a pre-determined threshold value at a channel connection port, this means that there is a short circuit at the channel connection port and the port is therefore connected directly to an antenna and does not require a DC power source or AISG control signals to be supplied from a BTS via the bypass path in the diplexer. As such, DC is not required to be supplied to the output connection port and the electrical switch in the control means of the bypass path remains in an open, disabled or off position.

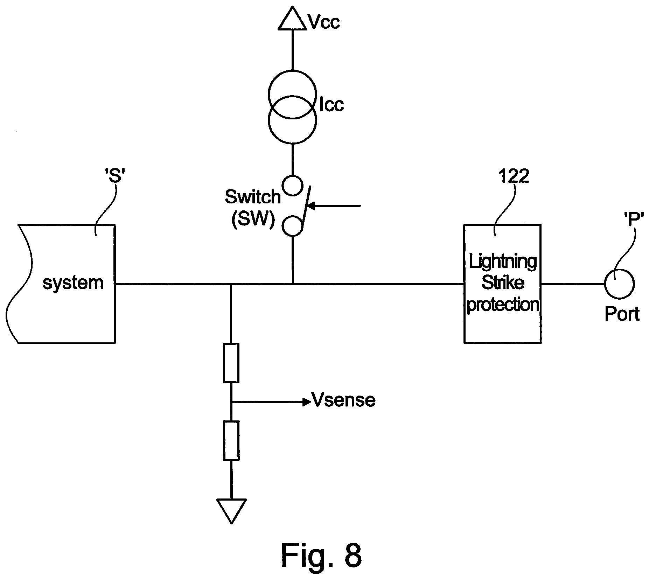

Referring to figure 8, there is a more detailed drawing showing how the micro-processing means or control circuitry detects whether there is a short circuit at a particular channel connection port (P) and/or detects electrical impedance. If the channel connection port (P) is to be used as an output port for connection to antennae or other power requiring equipment, then it is necessary to ascertain the electrical impedance of the external system before the channel port is enabled for output. During a checking phase operation of the control means, a small constant current source (Icc) is switched by switch 'SW' to the channel port (P), and the voltage (Vsense) at the channel port (P) is monitored. The level of the detected voltage is indicative of the electrical impedance of the external devices connected to port (P). This may be used in the port detection algorithm to decide whether the DC/control signal bypass path associated with that channel connection port may be enabled by operating switches within the auto-bypass circuitry (represented here by system 'S').

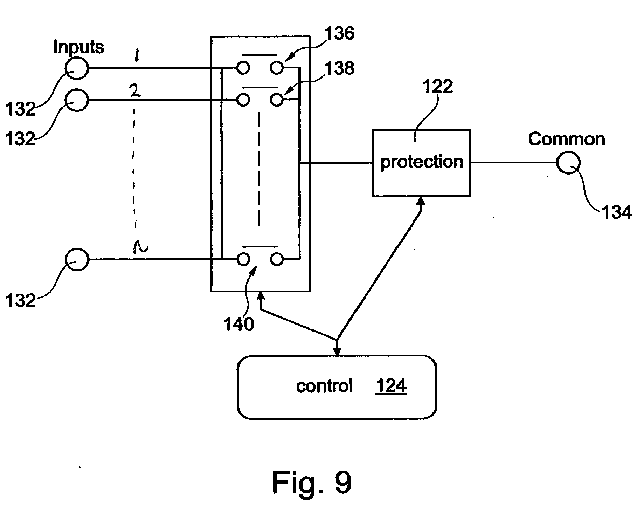

Although the above example is in the form of multiplexing apparatus for separating out a single or common antenna RF feed into a number of different antenna RF feeds (and could be described as de-multiplexing apparatus in a transmission direction) and is typically provided at a top of a cell site mast, it will be appreciated that the present invention could be in the form of multiplexing apparatus for combining a number of different antenna RF feeds into a single or common antenna RF feed (and could be described as multiplexing apparatus in a transmission direction) and is typically provided at a base of a cell site mast. Figure 9 is a simplified block diagram showing the circuitry used in the control means when the multiplexing apparatus is operating in a multiplexing mode in a transmission direction or is located at a base of the mast. In this mode of operation, a plurality of channel connection ports 132, labelled 1, 2, to n (where n is an integer) are provided and a common connection port 134 is provided. A parallel arrangement of electrical switches 136, 138, 140 is provided in the control circuitry for enabling (switching on) and/or disabling (switching off) the DC power and AISG control signal path between the plurality of channel connection ports 132 and the common connection port 134 in the bypass path. Lighting strike protection means 122 is provided between each switch 136, 138, 140 and the common connection port 134.

Typically only one channel connection port is selected to provide DC power and control signals to the common connection port. Micro-processing means or suitable electric control circuitry 124 are provided to determine which one of the plurality of channel connection ports will supply power and AISG control signals to the common connection port 134. This determination is undertaken using a rule base to determine the relative priority of each channel connection port compared to the other channel connection ports. The channel connection port which is determined to have the highest priority is selected as the DC power and control signal channel connection port and the bypass path associated with this channel connection port is moved to an enabled position. The switches in the other bypass paths associated with the other channel connection ports are switched to or remain in a disabled position.

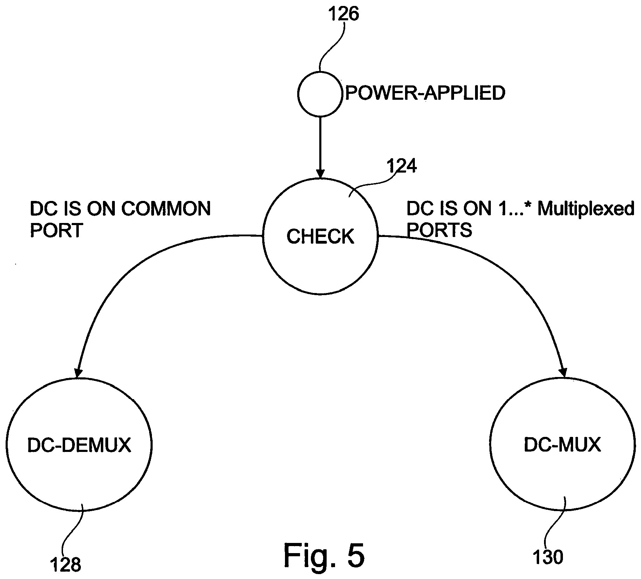

The multiplexing apparatus of the present invention is capable of operation in either a multiplexing mode or a de-multiplexing mode in a transmission direction, and the apparatus could be provided at any suitable point on a cell site mast. In this embodiment, when a DC voltage is applied to any of the ports 126, the micro-processing means or control circuitry 124 determines whether the channel connection ports have a DC voltage applied to them or whether the common connection ports have a DC voltage applied to them, as shown in figure 5. If the channel connection ports have a DC voltage applied (i.e. DC is detected on 1 of 'n' multiplexed channel ports), the control means knows that the apparatus is located at a base of a mast or is operating in a multiplexing mode 130 in a transmission direction. If the common connection port(s) have a DC voltage applied, the control means knows that the apparatus is located at a top of a mast or is operating in a de-multiplexing mode 128 in a transmission direction. Once the control means has determined the particular mode of operation of the apparatus and the orientation and/or position of the apparatus on the mast, the control means either enables or disables one or more bypass paths of the apparatus associated with the channel and/or common connection ports. The apparatus typically remains in the enabled or disabled mode permanently or in an unchanged mode until a user intervenes to change the status of the ports or the apparatus is depowered, wherein the status of the apparatus returns to the beginning of the flow chart again at 126.

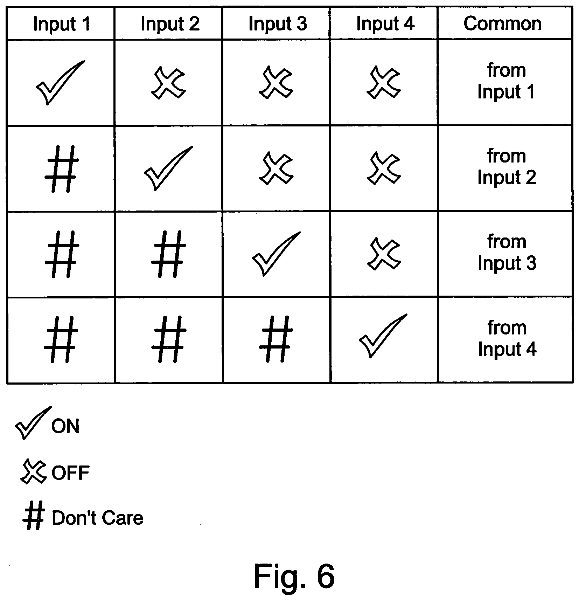

When the multiplexing apparatus is operating in a multiplexing mode in a transmission direction, two or more BTSs will typically be connected to the apparatus at the channel connection ports. In this scenario, only one of the BTSs is required to supply power and AISG control signals to the common connection port. If more than one BTS is supplying power and AISG control signals then the control means of the multiplexing apparatus switches the bypass path associated with the channel connection port having what is considered to be the "highest priority" to an enabled position, based upon a predefined set of rules. Figure 6 is a priority table showing an example of how the control means of the multiplexing apparatus determines which channel connection port is assigned to have the highest priority and thus when its associated bypass path should be enabled for DC and control signal transmission. In the priority table, the top line represents the input channel port (i.e. input 1, input 2, input 3, input 4). A tick in the table shows that DC is detected on that port and the bypass path associated with that port is enabled. A cross in the table shows that no DC is detected on that port and the bypass path is disabled. A # in the table shows that irrespective of whether DC is detected or not at a particular port, the particular port has lower priority over another port and therefore the bypass path associated with the port is disabled.

Whichever channel connection port is selected by the control means as being the highest priority port for the purposes of the present invention, this port is protected to ensure that the associated bypass path is not enabled in the case of DC resistance that is less than a predefined threshold.

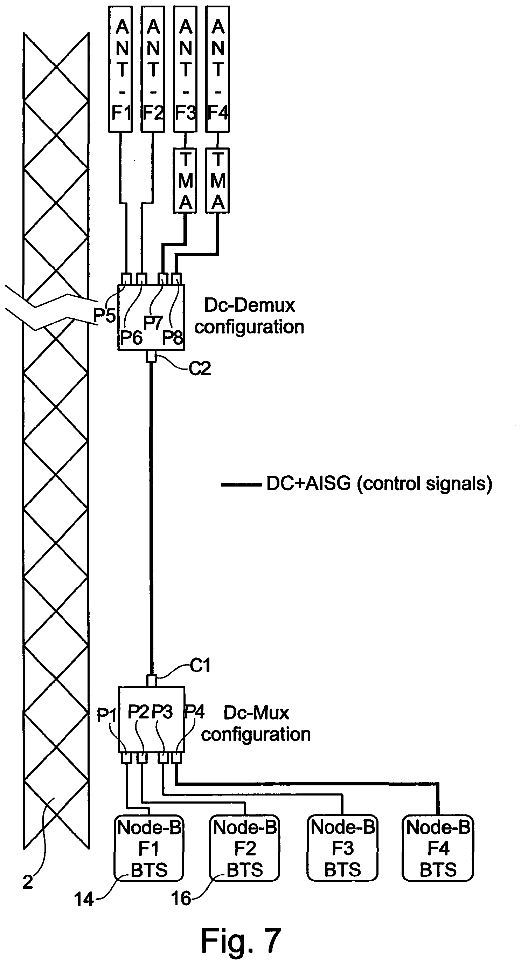

Figure 7 illustrated an example of a deployment scenario of the present invention in a cell site arrangement. Four BTSs or nodes are provided at a base of the mast and each has a specific frequency or frequency range (F1, F2, F3 or F4) over which it operates. A multiplexing apparatus (Dc-Mux) is connected to the four BTS via four channel ports (P1, P2, P3, P4) at the base of the mast 2 and a common port C1 connects the Dc-Mux apparatus to a common port C2 of de-multiplexing apparatus (Dc-Demux) at the top of the mast 2. Four channel ports P5, P6, P7, P8 connect the Dc-Demux to antenna (ANT). Channel ports P7, P8 connect to the antenna via TMAs, whereas channel ports P5 and P6 connected directly to the antenna. As such, the antenna presents a DC short circuit to ports P5 and P6 and the bypass paths for ports P5 and P6 are therefore disabled. The TMAs do not present a DC short circuit to ports P7 and P8 and so the bypass paths for these ports are enabled. Thus, a plurality of bypass paths can be enabled in the apparatus when operating in a DC-Demux mode, such that the DC power and AISG control signals travels from BTS operating on F4 to TMAs operating on F3 and F4.

## Claims

1. Multiplexing apparatus (102), said multiplexing apparatus including at least one common connection port (28, 28', 108, 134, C1, C2) and at least one channel connection port (24, 24', 26, 26', 110, 112, 114, 132, P1, P2, P3, P4, P5, P6, P7, P8), one or more radio frequency paths connected between said at least one common connection port (28, 28', 108, 134, C1, C2) and said at least one channel connection port (24, 24', 26, 26', 110, 112, 114, 132, P1, P2, P3, P4, P5, P6, P7, P8) for transmitting and/or receiving one or more radio frequency signals therealong, at least one bypass path (36, 36', 106, 106') provided between said at least one common port (28, 28', 108, 134, C1, C2) and at least one of said channel ports (24, 24', 26, 26', 110, 112, 114, 132, P1, P2, P3, P4, P5, P6, P7, P8) for the passage of direct current power and/or one or more control signals therealong, control means (104, 104')are provided in or associated with the apparatus (102) to allow detection of one or more electrical values at or associated with one or more of the common (28, 28', 108, 134, C1, C2) and/or channel ports (24, 24', 26, 26', 110, 112, 114, 132, P1, P2, P3, P4, P5, P6, P7, P8) and to control whether the at least one bypass path (36, 36' 106, 106') is enabled or disabled according to the one or more electrical values detected, **characterised in that** the control means (104, 104') are arranged to detect which of the common (28, 28', 108, 134, C1, C2) and/or channel connection ports (24, 24', 26, 26', 110, 112, 114, 132, P1, P2, P3, P4, P5, P6, P7, P8) has direct current or voltage present at the port, and wherein if the common connection port (28, 28', 108, 134, C1, C2) is found to have direct current or voltage present, the control means (104, 104') is able to determine the apparatus is functioning in a de-multiplexing mode (128, Dc-Demux) in a transmission direction or is located at a top of a mast (2), and wherein if one or more of the channel connection ports (24, 24', 26, 26', 110, 112, 114, 132, P1, P2, P3, P4, P5, P6, P7, P8) is found to have direct current or voltage present, the control means (104, 104') is able to determine the apparatus is functioning in a multiplexing mode (130, Dc-Mux) in a transmission direction or is positioned at a base of a mast (2).

2. Multiplexing apparatus according to claim 1 wherein a first radio frequency path is provided in the apparatus (102) between a first channel connection port (24, 24', 26, 26', 110, 112, 114, 132, P1, P2, P3, P4, P5, P6, P7, P8) and the common connection port (28, 28', 108, 134, C1, C2) for the transmission and/or receiving of one or more radio frequency signals at a first radio frequency or frequency range (F1), wherein at least a second radio frequency path is provided in the apparatus (102) between a second channel connection port (24, 24', 26, 26', 110, 112, 114, 132, P1, P2, P3, P4, P5, P6, P7, P8) and the common connection port (28, 28', 108, 134, C1, C2) for the transmission and/or receiving of one or more radio frequency signals at a second radio frequency or frequency range (F2), wherein one or more radio frequency filters (30, 30') are provided in the first radio frequency path for allowing passage of one or more radio frequency signals at the first frequency or frequency range (F1) therethrough but preventing the passage of one or more radio frequency signals at a second and/or other radio frequency or frequency range (F2), wherein one or more radio frequency filters (32, 32') are provided in the at least second radio frequency path for allowing passage of one or more radio frequency signals at the second frequency or frequency range (F2) therethrough but preventing the passage of one or more radio frequency signals at a first (F1) and/or other radio frequency or frequency range.

3. Multiplexing apparatus according to claim 2 wherein a bypass path (36, 36', 106, 106') is provided in the first and/or at least second radio frequency path to bypass at least one or more radio frequency filters (30, 30', 32, 32') in said path.

4. Multiplexing apparatus according to claim 1 wherein as the control means (104, 104') is arranged to allow the apparatus (102) to detect, in use whether direct current or voltage is present at the one or more common and/or channel connection ports, the control means is arranged to determine the type of connections that have been made at the one or more common (28, 28', 108, 134, C1, C2) and/or channel connection ports (24, 24', 26, 26', 110, 112, 114, 132, P1, P2, P3, P4, P5, P6, P7, P8), where the apparatus has been fitted in a radio frequency cell site arrangement, what equipment the apparatus (102) has been fitted to, the orientation of the apparatus in the cell site arrangement and/or what mode the apparatus is able to function in.

5. Multiplexing apparatus according to claim 1 wherein when the apparatus (102) is in a radio frequency multiplexing mode (130, Dc-Mux) in a transmission direction, one or more transmitted radio frequency signals are arranged to pass through the apparatus (102) between or from a plurality of channel connection ports (24, 24', 26, 26', 110, 112, 114, 132, P1, P2, P3, P4, P5, P6, P7, P8) to a single or common output connection port (28, 28', 108, 134, C1, C2); when the apparatus (102) is in a radio frequency de-multiplexing mode (128, Dc-Demux) in a transmission direction, one or more transmitted radio frequency signals are arranged to pass through the apparatus (102) between or from a single or common input connection port (28, 28', 108, 134, C1, C2) to a plurality of channel connection ports (24, 24', 26, 26', 110, 112; 114, 132, P1, P2, P3, P4, P5, P6, P7, P8).

6. Multiplexing apparatus according to claim 4 wherein once the control means (104, 104') has determined the radio frequency mode of operation of the apparatus (102), the type of connections, the orientation of the apparatus (102) in a cell site arrangement the location of fitting of the apparatus (102) in a cell site arrangement and/or the equipment the apparatus (102) has been fitted to, the control means (104, 104') is arranged to enable or disable one or more bypass paths (36, 36', 106, 106') in the apparatus (102).

7. Multiplexing apparatus according to claim 1 wherein once the control means (104, 104') has determined the apparatus (102) is in a radio frequency multiplexing mode(130, Dc-Mux) in a transmission direction, only one of the plurality of channel connection ports (24, 24', 26, 26', 110, 112, 114, 132, P1, P2, P3, P4, P5, P6, P7, P8) needs to supply direct current power and/or one or more control signals through the apparatus (102), and the control means (104, 104')is arranged to select a bypass path (36, 36', 106, 106') connected between a channel connection portion (24, 24', 26, 26', 110, 112, 114, 132, P1, P2, P3, P4, P5, P6, P7, P8) and a common connection port (28, 28', 108, 134, C1, C2) and is arranged to enable this bypass path (36, 36', 106, 106'), and disable any other bypass path (36, 36', 106, 106') in the apparatus (102).

8. Multiplexing apparatus according to claim 1 wherein if direct current, voltage or an electrical value is detected at a plurality of channel connection ports (24, 24', 26, 26', 110, 112, 114, 132, P1, P2, P3, P4, P5, P6, P7, P8) during an initial operational mode set up procedure, only one of the channel connection ports (24, 24', 26, 26', 110, 112, 114, 132, P1, P2, P3, P4, P5, P6, P7, P8) is selected as the direct current power source and/or control signal or Antenna Interface Standards Group control signal source.

9. Multiplexing apparatus according to claim 8 wherein the control means (104, 104') identifies the channel connection port (24, 24', 26, 26', 110, 112, 114, 132, P1, P2, P3, P4, P5, P6, P7, P8) with the highest priority based on a pre-defined set of rules, the bypass path (36, 36', 106, 106') associated with the selected port is then enabled and the bypass paths (36, 36', 106, 106') associated with the other non-selected ports are disabled.

10. Multiplexing apparatus according to claim 1 wherein the one or more electrical values detected by the control means (104, 104') includes any or any combination of electrical current, voltage, electrical impedance or electrical resistance.

11. Multiplexing apparatus according to claim 1 wherein the control means (104, 104') is arranged to control enablement or disablement of one or more bypass paths (36, 36', 106, 106') in the apparatus (102) when an electrical value is measured at an associated common (28, 28', 108, 134, C1, C2) and/or channel connection port (24, 24', 26, 26', 110, 112, 114, 132, P1, P2, P3, P4, P5, P6, P7, P8) above or below a pre-determined threshold value.

12. Multiplexing apparatus according to claim 1 wherein the control means (104, 104') is arranged to disable one or more bypass paths (36, 36', 106, 106') if a short circuit is detected at one or more associated channel (24, 24', 26, 26' 110, 112, 114, 132, P1, P2, P3, P4, P5, P6, P7, P8) and/or common connection ports (28, 28', 108, 134, C1, C2) or the control means (104, 104') is arranged to enable one or more bypass paths (36, 36', 106, 106') if a short circuit is not detected at one or more associated channel (24, 24', 26, 26', 110, 112, 114, 132, P1, P2, P3, P4, P5, P6, P7, P8) and/or common connection ports (28, 28', 108, 134, C1, C2) when in a de-multiplexing mode (128, Dc-Demux).

13. Multiplexing apparatus according to claim 1 wherein the control means (104, 104') includes one or more electrical switches (116, 118, 120, 136, 138, 140) which can be moved between an "on" condition to enable a bypass path (36, 36', 106, 106'), and an "off" condition to disable a bypass path (36, 36', 106, 106').

14. Multiplexing apparatus according to claim 1 wherein each channel (24, 24', 26, 26', 110, 112, 114, 132, P1, P2, P3, P4, P5, P6, P7, P8) and/or common connection port (28, 28', 108, 134, C1, C2) has or employs a mechanism to determine whether the electrical impedance of an external system or apparatus is within a pre-determined range, and wherein the control means (104, 104') is arranged to undergo a checking phase during operation, whereby the control means (104, 104') is arranged to switch a constant current source to the connection port and the voltage at the port is monitored, the level of detected voltage being indicative of the impedance of the external system or apparatus and is used by a port detection algorithm to determine whether the bypass path (36, 36', 106, 106') associated with that port can or should be enabled.

15. A method of using a multiplexing apparatus (102), said multiplexing apparatus including at least one common connection port (28, 28', 108, 134, C1, C2) and at least one channel connection port (24, 24', 26, 26', 110, 112, 114, 132, P1, P2, P3, P4, P5, P6, P7, P8), said method including the steps of connecting one or more radio frequency paths between said at least one common connection port (28, 28', 108, 134, C1, C2) and said at least one channel connection port (24, 24', 26, 26', 110, 112, 114, 132, P1, P2, P3, P4, P5, P6, P7, P8) for transmitting and/or receiving one or more radio frequency signals therealong, connecting at least one bypass path (36, 36', 106, 106') provided between said at least one common port (28, 28', 108, 134, C1, C2) and at least one of said channel ports (24, 24', 26, 26', 110, 112, 114, 132, P1, P2, P3, P4, P5, P6, P7, P8) for the passage of direct current power and/or one or more control signals therealong, using control means (104, 104') provided in or associated with the apparatus (102) for detecting one or more electrical values at or associated with one or more of the common (28, 28', 108, 134, C1, C2) and/or channel ports (24, 24', 26, 26', 110, 112, 114, 132, P1, P2, P3, P4, P5, P6, P7, P8) and controlling whether the at least one bypass path (36, 36' 106, 106') is enabled or disabled according to the one or more electrical values detected, **characterised in that** the control means (104, 104') detects which of the common (28, 28', 108, 134, C1, C2) and/or channel connection ports (24, 24', 26, 26', 110, 112, 114, 132, P1, P2, P3, P4, P5, P6, P7, P8) has direct current or voltage present at the port, and wherein if the common connection port (28, 28', 108, 134, C1, C2) is found to have direct current or voltage present, the control means (104, 104') determines the apparatus is functioning in a de-multiplexing mode (128, Dc-Demux) in a transmission direction or is located at a top of a mast (2), and wherein if one or more of the channel connection ports (24, 24', 26, 26', 110, 112, 114, 132, P1, P2, P3, P4, P5, P6, P7, P8) is found to have direct current or voltage present, the control means (104, 104') determines the apparatus is functioning in a multiplexing mode (130, Dc-Mux) in a transmission direction or is positioned at a base of a mast (2).

## Patentansprüche

1. Multiplexvorrichtung (102), wobei die genannte Multiplexvorrichtung wenigstens einen gemeinsamen Verbindungsport (28, 28', 108, 134, C1, C2) und wenigstens einen Kanalverbindungsport (24, 24', 26, 26', 110, 112, 114, 132, P1, P2, P3, P4, P5, P6, P7, P8) beinhaltet, wobei ein oder mehr Hochfrequenzpfade zwischen dem genannten wenigstens einen gemeinsamen Verbindungsport (28, 28', 108, 134, C1, C2) und dem genannten wenigstens einen Kanalverbindungsport (24, 24', 26, 26', 110, 112, 114, 132, P1, P2, P3, P4, P5, P6, P7, P8) zum Übertragen und/oder Empfangen von einem oder mehr Hochfrequenzsignalen daran entlang angeschlossen sind, wenigstens ein Umgehungspfad (36, 36', 106, 106') zwischen dem genannten wenigstens einen gemeinsamen Port (28, 28', 108, 134, C1, C2) und wenigstens einem der genannten Kanalports (24, 24', 26, 26', 110, 112, 114, 132, P1, P2, P3, P4, P5, P6, P7, P8) für den Durchgang von Gleichstromleistung und/oder einem oder mehr Steuersignalen daran entlang bereitgestellt ist, Steuermittel (104, 104') in bzw. mit der Vorrichtung (102) zum Zulassen der Erkennung von einem oder mehr elektrischen Werten, die an einem oder mehr der gemeinsamen (28, 28', 108, 134, C1, C2) und/oder Kanalports (24, 24', 26, 26', 110, 112, 114, 132, P1, P2, P3, P4, P5, P6, P7, P8) oder damit assoziiert sind, und zum Steuern, ob der wenigstens eine Umgehungspfad (36, 36', 106, 106') gemäß dem einen oder den mehr erkannten elektrischen Werten aktiviert oder deaktiviert wird, bereitgestellt oder assoziiert sind, **dadurch gekennzeichnet, dass** die Steuermittel (104, 104') angeordnet sind, um zu erkennen, an welchem der gemeinsamen (28, 28', 108, 134, C1, C2) und/oder Kanalverbindungsports (24, 24', 26, 26', 110, 112, 114, 132, P1, P2, P3, P4, P5, P6, P7, P8) Gleichstrom oder -spannung an dem Port vorhanden ist, und wobei, falls festgestellt wird, dass an dem gemeinsamen Verbindungsport (28, 28', 108, 134, C1, C2) Gleichstrom oder -spannung vorhanden ist, das Steuermittel (104, 104') bestimmen kann, dass die Vorrichtung in einer Übertragungsrichtung in einem Entbündelungsmodus (128, Dc-Demux) funktioniert oder sich oben an einem Mast (2) befindet, und wobei, falls festgestellt wird, dass an einem oder mehr der Kanalverbindungsports (24, 24', 26, 26', 110, 112, 114, 132, P1, P2, P3, P4, P5, P6, P7, P8) Gleichstrom oder -spannung vorhanden ist, das Steuermittel (104, 104') bestimmen kann, dass die Vorrichtung in einer Übertragungsrichtung in einem Bündelungsmodus (130, Dc-Mux) funktioniert oder an einer Basis eines Masts (2) positioniert ist.

2. Multiplexvorrichtung nach Anspruch 1, wobei in der Vorrichtung (102) zwischen einem ersten Kanalverbindungsport (24, 24', 26, 26', 110, 112, 114, 132, P1, P2, P3, P4, P5, P6, P7, P8) und dem gemeinsamen Verbindungsport (28, 28', 108, 134, C1, C2) ein erster Hochfrequenzpfad für die Übertragung und/oder den Empfang von einem oder mehr Hochfrequenzsignalen auf einer bzw. in einem ersten Hochfrequenz oder -frequenzbereich (F1) bereitgestellt ist, wobei in der Vorrichtung (102) zwischen einem zweiten Kanalverbindungsport (24, 24', 26, 26', 110, 112, 114, 132, P1, P2, P3, P4, P5, P6, P7, P8) und dem gemeinsamen Verbindungsport (28, 28', 108, 134, C1, C2) wenigstens ein zweiter Hochfrequenzpfad für die Übertragung und/oder den Empfang von einem oder mehr Hochfrequenzsignalen auf einer bzw. in einem zweiten Hochfrequenz oder -frequenzbereich (F2) bereitgestellt ist, wobei in dem ersten Hochfrequenzpfad ein oder mehr Hochfrequenzfilter (30, 30') zum Zulassen des Durchgangs von einem oder mehr Hochfrequenzsignalen auf der bzw. in dem ersten Frequenz oder Frequenzbereich (F1) durch ihn bzw. sie, aber zum Verhindern des Durchgangs von einem oder mehr Hochfrequenzsignalen auf einer bzw. in einem zweiten und/oder anderen Hochfrequenz oder -frequenzbereich (F2) bereitgestellt sind, wobei in dem wenigstens zweiten Hochfrequenzpfad ein oder mehr Hochfrequenzfilter (32, 32') zum Zulassen des Durchgangs von einem oder mehr Hochfrequenzsignalen auf der bzw. in dem zweiten Frequenz oder Frequenzbereich (F2) durch ihn bzw. sie, aber zum Verhindern des Durchgangs von einem oder mehr Hochfrequenzsignalen auf einer bzw. in einem ersten (F1) und/oder anderen Hochfrequenz oder -frequenzbereich bereitgestellt sind.

3. Multiplexvorrichtung nach Anspruch 2, wobei in dem ersten und/oder dem wenigstens zweiten Hochfrequenzpfad ein Umgehungspfad (36, 36', 106, 106') zum Umgehen von wenigstens einem oder mehr Hochfrequenzfiltern (30, 30', 32, 32') in dem genannten Pfad bereitgestellt ist.

4. Multiplexvorrichtung nach Anspruch 1, wobei, da das Steuermittel (104, 104') angeordnet ist, um die Vorrichtung (102) im Gebrauch erkennen zu lassen, ob an dem einen oder den mehr gemeinsamen und/oder Kanalverbindungsports Gleichstrom oder -spannung vorhanden ist, das Steuermittel zum Bestimmen des Typs von Verbindungen, der an dem einen oder den mehr gemeinsamen (28, 28', 108, 134, C1, C2) und/oder Kanalverbindungsports (24, 24', 26, 26', 110, 112, 114, 132, P1, P2, P3, P4, P5, P6, P7, P8) hergestellt wurden, wo die Vorrichtung in einer Hochfrequenzzellenstandortanordnung montiert wurde, an welcher Einrichtung die Vorrichtung (102) montiert wurde, der Ausrichtung der Vorrichtung in der Zellenstandortanordnung und/oder in welchem Modus die Vorrichtung funktionieren kann, angeordnet ist.

5. Multiplexvorrichtung nach Anspruch 1, wobei, wenn die Vorrichtung (102) in einer Übertragungsrichtung in einem Hochfrequenz-Bündelungsmodus (130, Dc-Mux) ist, ein oder mehr übertragene Hochfrequenzsignale für den Durchgang zwischen oder von mehreren Kanalverbindungsports (24, 24', 26, 26', 110, 112, 114, 132, P1, P2, P3, P4, P5, P6, P7, P8) zu einem einzelnen oder gemeinsamen Ausgangsverbindungsport (28, 28', 108, 134, C1, C2) durch die Vorrichtung (102) angeordnet sind; wenn die Vorrichtung (102) in einer Übertragungsrichtung in einem Hochfrequenz-Entbündelungsmodus (128, Dc-Demux) ist, ein oder mehr übertragene Hochfrequenzsignale für den Durchgang zwischen oder von einem einzelnen oder gemeinsamen Ausgangsverbindungsport (28, 28', 108, 134, C1, C2) zu mehreren Kanalverbindungsports (24, 24', 26, 26', 110, 112, 114, 132, P1, P2, P3, P4, P5, P6, P7, P8) durch die Vorrichtung (102) angeordnet sind.

6. Multiplexvorrichtung nach Anspruch 4, wobei, sobald das Steuermittel (104, 104') den Hochfrequenz-Betriebsmodus der Vorrichtung (102), den Verbindungstyp, die Ausrichtung der Vorrichtung (102) in einer Zellenstandortanordnung, den Montageort der Vorrichtung (102) in einer Zellenstandortanordnung und/oder die Einrichtung, an der die Vorrichtung (102) montiert wurde, bestimmt hat, das Steuermittel (104, 104') zum Aktivieren oder Deaktivieren von einem oder mehr Umgehungspfaden (36, 36', 106, 106') in der Vorrichtung (102) angeordnet ist.

7. Multiplexvorrichtung nach Anspruch 1, wobei, sobald das Steuermittel (104, 104') bestimmt hat, dass die Vorrichtung (102) in einer Übertragungsrichtung in einem Hochfrequenzbündelungsmodus (130, Dc-Mux) ist, nur einer der mehreren Kanalverbindungsports (24, 24', 26, 26', 110, 112, 114, 132, P1, P2, P3, P4, P5, P6, P7, P8) Gleichstromleistung und/oder ein oder mehr Steuersignale durch die Vorrichtung (102) zuzuführen braucht und das Steuermittel (104, 104') zum Auswählen eines zwischen einem Kanalverbindungsteil (24, 24', 26, 26', 110, 112, 114, 132, P1, P2, P3, P4, P5, P6, P7, P8) und einem gemeinsamen Verbindungsport (28, 28', 108, 134, C1, C2) angeschlossenen Umgehungspfads (36, 36', 106, 106') angeordnet ist und zum Aktivieren dieses Umgehungspfads (36, 36', 106, 106') und zum Deaktivieren jedes anderen Umgehungspfads (36, 36', 106, 106') in der Vorrichtung (102) angeordnet ist.

8. Multiplexvorrichtung nach Anspruch 1, wobei, wenn während eines anfänglichen Betriebsmoduseinrichtungsverfahrens an mehreren Kanalverbindungsports (24, 24', 26, 26', 110, 112, 114, 132, P1, P2, P3, P4, P5, P6, P7, P8) Gleichstrom, Spannung oder ein elektrischer Wert erkannt wird, nur einer der Kanalverbindungsports (24, 24', 26, 26', 110, 112, 114, 132, P1, P2, P3, P4, P5, P6, P7, P8) als die Gleichstromleistungsquelle und/oder die Steuersignal- oder Antenna Interface Standards Group-Steuersignalquelle ausgewählt wird.

9. Multiplexvorrichtung nach Anspruch 8, wobei das Steuermittel (104, 104') den Kanalverbindungsport (24, 24', 26, 26', 110, 112, 114, 132, P1, P2, P3, P4, P5, P6, P7, P8) mit der höchsten Priorität auf Basis eines vordefinierten Regelsatzes identifiziert, dann der mit dem ausgewählten Port assoziierte Umgehungspfad (36, 36', 106, 106') aktiviert wird und die mit den anderen nicht ausgewählten Ports assoziierten Umgehungspfade (36, 36', 106, 106') deaktiviert werden.

10. Multiplexvorrichtung nach Anspruch 1, wobei der eine oder die mehr von dem Steuermittel (104, 104') erkannten elektrischen Werte eines oder eine Kombination von elektrischem Strom, Spannung, elektrischer Impedanz oder elektrischem Widerstand beinhalten.

11. Multiplexvorrichtung nach Anspruch 1, wobei das Steuermittel (104, 104') angeordnet ist zum Steuern der Aktivierung oder Deaktivierung von einem oder mehr Umgehungskanälen (36, 36', 106, 106') in der Vorrichtung (102), wenn ein elektrischer Wert an einem assoziierten gemeinsamen (28, 28', 108, 134, C1, C2) und/oder Kanalverbindungsport (24, 24', 26, 26', 110, 112, 114, 132, P1, P2, P3, P4, P5, P6, P7, P8) über oder unter einem vorbestimmten Schwellenwert gemessen wird.

12. Multiplexvorrichtung nach Anspruch 1, wobei das Steuermittel (104, 104') zum Deaktivieren von einem oder mehr Umgehungspfaden (36, 36', 106, 106'), wenn an einem oder mehr assoziierten Kanal- (24, 24', 26, 26', 110, 112, 114, 132, P1, P2, P3, P4, P5, P6, P7, P8) und/oder gemeinsamen Verbindungsports (28, 28', 108, 134, C1, C2) ein Kurzschluss erkannt wird, konfiguriert ist oder das Steuermittel (104, 104') zum Aktivieren von einem oder mehr Umgehungspfaden (36, 36', 106, 106'), wenn an einem oder mehr assoziierten Kanal- (24, 24', 26, 26', 110, 112, 114, 132, P1, P2, P3, P4, P5, P6, P7, P8) und/oder gemeinsamen Verbindungsports (28, 28', 108, 134, C1, C2) kein Kurzschluss erkannt wird, angeordnet ist, wenn in einem Entbündelungsmodus (128, Dc-Demux).

13. Multiplexvorrichtung nach Anspruch 1, wobei das Steuermittel (104, 104') einen oder mehr elektrische Schalter (116, 118, 120, 136, 138, 140) beinhaltet, die zwischen einer "eingeschalteten" Bedingung zum Aktivieren eines Umgehungspfads (36, 36', 106, 106') und einer "ausgeschalteten" Bedingung zum Deaktivieren eines Umgehungspfads (36, 36', 106, 106') bewegt werden können.

14. Multiplexvorrichtung nach Anspruch 1, wobei jeder Kanal- (24, 24', 26, 26', 110, 112, 114, 132, P1, P2, P3, P4, P5, P6, P7, P8) und/oder gemeinsame Verbindungsport (28, 28', 108, 134, C1, C2) einen Mechanismus hat oder einsetzt, um zu bestimmen, ob die elektrische Impedanz eines bzw. einer externen Systems oder Vorrichtung innerhalb eines vorbestimmten Bereichs ist, und wobei das Steuermittel (104, 104') zum Durchlaufen einer Prüfphase während des Betriebs angeordnet ist, so dass das Steuermittel (104, 104') zum Umschalten einer Konstantstromquelle auf den Verbindungsport angeordnet ist und die Spannung an dem Port überwacht wird, wobei der Pegel der erkannten Spannung die Impedanz des bzw. der externen Systems oder Vorrichtung erkennen lässt und von einem Porterkennungsalgorithmus verwendet wird, um zu bestimmen, ob der mit diesem Port assoziierte Umgehungspfad (36, 36', 106, 106') aktiviert werden kann oder sollte.

15. Verfahren zur Verwendung einer Multiplexvorrichtung (102), wobei die genannte Multiplexvorrichtung wenigstens einen gemeinsamen Verbindungsport (28, 28', 108, 134, C1, C2) und wenigstens einen Kanalverbindungsport (24, 24', 26, 26', 110, 112, 114, 132, P1, P2, P3, P4, P5, P6, P7, P8) beinhaltet, wobei das genannte Verfahren die folgenden Schritte beinhaltet: Anschließen von einem oder mehr Hochfrequenzpfaden zwischen dem genannten wenigstens einen gemeinsamen Verbindungsport (28, 28', 108, 134, C1, C2) und dem genannten wenigstens einen Kanalverbindungsport (24, 24', 26, 26', 110, 112, 114, 132, P1, P2, P3, P4, P5, P6, P7, P8) zum Übertragen und/oder Empfangen von einem oder mehr Hochfrequenzsignalen daran entlang, Verbinden von wenigstens einen Umgehungspfad (36, 36', 106, 106'), der zwischen dem genannten wenigstens einen gemeinsamen Port (28, 28', 108, 134, C1, C2) und wenigstens einem der genannten Kanalports (24, 24', 26, 26', 110, 112, 114, 132, P1, P2, P3, P4, P5, P6, P7, P8) für den Durchgang von Gleichstromleistung und/oder einem oder mehr Steuersignalen daran entlang bereitgestellt ist, Verwenden von Steuermitteln (104, 104'), die in bzw. mit der Vorrichtung (102) zum Erkennen von einem oder mehr elektrischen Werten, die an einem oder mehr der gemeinsamen (28, 28', 108, 134, C1, C2) und/oder Kanalports (24, 24', 26, 26', 110, 112, 114, 132, P1, P2, P3, P4, P5, P6, P7, P8) oder damit assoziiert sind, und Steuern, ob der wenigstens eine Umgehungspfad (36, 36', 106, 106') gemäß dem einen oder den mehr erkannten elektrischen Werten aktiviert oder deaktiviert wird, bereitgestellt oder assoziiert sind, **dadurch gekennzeichnet, dass** das Steuermittel (104, 104') erkennt, an welchem der gemeinsamen (28, 28', 108, 134, C1, C2) und/oder Kanalverbindungsports (24, 24', 26, 26', 110, 112, 114, 132, P1, P2, P3, P4, P5, P6, P7, P8) Gleichstrom oder -spannung an dem Port vorhanden ist, und wobei, falls festgestellt wird, dass an dem gemeinsamen Verbindungsport (28, 28', 108, 134, C1, C2) Gleichstrom oder -spannung vorhanden ist, das Steuermittel (104, 104') bestimmt, dass die Vorrichtung in einer Übertragungsrichtung in einem Entbündelungsmodus (128, Dc-Demux) funktioniert oder sich oben an einem Mast (2) befindet, und wobei, falls festgestellt wird, dass an einem oder mehr der Kanalverbindungsports (24, 24', 26, 26', 110, 112, 114, 132, P1, P2, P3, P4, P5, P6, P7, P8) Gleichstrom oder -spannung vorhanden ist, das Steuermittel (104, 104') bestimmt, dass die Vorrichtung in einer Übertragungsrichtung in einem Bündelungsmodus (130, Dc-Mux) funktioniert oder an einer Basis eines Masts (2) positioniert ist.

## Revendications

1. Appareil de multiplexage (102), ledit appareil de multiplexage incluant au moins un port de connexion commun (28, 28', 108, 134, C1, C2) et au moins un port de connexion de canal (24, 24', 26, 26', 110, 112, 114, 132, P1, P2, P3, P4, P5, P6, P7, P8), un ou plusieurs trajets de radiofréquence connectés entre ledit au moins un port de connexion commun (28, 28', 108, 134, C1, C2) et ledit au moins un port de connexion de canal (24, 24', 26, 26', 110, 112, 114, 132, P1, P2, P3, P4, P5, P6, P7, P8) pour transmettre et/ou recevoir un ou plusieurs signaux de radiofréquence le long de ceux-ci, au moins un trajet de dérivation (36, 36', 106, 106') prévu entre ledit au moins un port commun (28, 28', 108, 134, C1, C2) et au moins un desdits ports de canal (24, 24', 26, 26', 110, 112, 114, 132, P1, P2, P3, P4, P5, P6, P7, P8) pour le passage de l'énergie en courant continu et/ou un ou plusieurs signaux de contrôle le long de ceux-ci, des moyens de contrôle (104, 104') étant prévus dans l'appareil (102), ou étant associés à ce dernier, pour permettre la détection d'une ou de plusieurs valeurs électriques au niveau de, ou associées à, un ou plusieurs des ports communs (28, 28', 108, 134, C1, C2) et/ou des ports de canal (24, 24', 26, 26', 110, 112, 114, 132, P1, P2, P3, P4, P5, P6, P7, P8), et pour contrôler afin de savoir si ledit au moins un trajet de dérivation (36, 36', 106, 106') est validé ou invalidé en fonction de cette une ou plusieurs valeurs électriques détectées, **caractérisé en ce que** les moyens de contrôle (104, 104') sont agencés de façon à détecter lequel des ports de connexion communs (28, 28', 108, 134, C1, C2) et/ou des ports de connexion de canal (24, 24', 26, 26', 110, 112, 114, 132, P1, P2, P3, P4, P5, P6, P7, P8) possède un courant continu ou une tension qui est présent au niveau du port, et cas dans lequel s'il est trouvé que le port de connexion commun (28, 28', 108, 134, C1, C2) possède un courant continu ou une tension qui est présent, le moyen de contrôle (104, 104') est apte à déterminer que l'appareil est en train de fonctionner dans un mode de démultiplexage (128, Dc-Demux) dans un sens de transmission ou est localisé au niveau d'une partie supérieure d'un mât (2), et cas dans lequel s'il est trouvé qu'un ou plusieurs des ports de connexion de canal (24, 24', 26, 26', 110, 112, 114, 132, P1, P2, P3, P4, P5, P6, P7, P8) possède/possèdent un courant continu ou une tension qui est présent, le moyen de contrôle (104, 104') est apte à déterminer que l'appareil est en train de fonctionner dans un mode de multiplexage (130, Dc-Mux) dans un sens de transmission ou est positionné au niveau d'une base d'un mât (2).

2. Appareil de multiplexage selon la revendication 1, un premier trajet de radiofréquence étant prévu dans l'appareil (102) entre un premier port de connexion de canal (24, 24', 26, 26', 110, 112, 114, 132, P1, P2, P3, P4, P5, P6, P7, P8) et le port de connexion commun (28, 28', 108, 134, C1, C2) pour la transmission et/ou la réception d'un ou de plusieurs signaux de radiofréquence à une première radiofréquence ou gamme de fréquences (F1), cas dans lequel au moins un deuxième trajet de radiofréquence est prévu dans l'appareil (102) entre un deuxième port de connexion de canal (24, 24', 26, 26', 110, 112, 114, 132, P1, P2, P3, P4, P5, P6, P7, P8) et le port de connexion commun (28, 28', 108, 134, C1, C2) pour la transmission et/ou la réception d'un ou de plusieurs signaux de radiofréquence à une deuxième radiofréquence ou gamme de fréquences (F2), cas dans lequel un ou plusieurs filtres de radiofréquence (30, 30') sont prévus dans le premier trajet de radiofréquence pour permettre le passage d'un ou de plusieurs signaux de radiofréquence à la première fréquence ou gamme de fréquences (F1) à travers celui-ci mais pour empêcher le passage d'un ou de plusieurs signaux de radiofréquence à une deuxième et/ou autre radiofréquence ou gamme de fréquences (F2), cas dans lequel un ou plusieurs filtres de radiofréquence (32, 32') sont prévus dans ledit au moins deuxième trajet de radiofréquence pour permettre le passage d'un ou de plusieurs signaux de radiofréquence à la deuxième fréquence ou gamme de fréquences (F2) à travers celui-ci mais pour empêcher le passage d'un ou de plusieurs signaux de radiofréquence à une première (F1) et/ou autre radiofréquence ou gamme de fréquences.

3. Appareil de multiplexage selon la revendication 2, un trajet de dérivation (36, 36', 106, 106') étant prévu dans le premier et/ou au moins le deuxième trajet de radiofréquence afin de contourner au moins un ou plusieurs filtres de radiofréquence (30, 30', 32, 32') dans ledit trajet.

4. Appareil de multiplexage selon la revendication 1, du fait que le moyen de contrôle (104, 104') est agencé de façon à permettre à l'appareil (102) de détecter, en utilisation, si un courant continu ou une tension est présent au niveau de l'un ou de plusieurs ports de connexion communs ou de canal, le moyen de contrôle étant agencé de façon à déterminer le type de connexions qui ont été faites au niveau de l'un ou de plusieurs ports de connexion communs (28, 28', 108, 134, C1, C2) et/ou ports de connexion de canal (24, 24', 26, 26', 110, 112, 114, 132, P1, P2, P3, P4, P5, P6, P7, P8), le lieu où l'appareil a été monté dans un agencement de site à cellule de radiofréquence, la nature de l'équipement auquel l'appareil (102) a été monté, l'orientation de l'appareil dans l'agencement de site à cellule et/ou la nature du mode dans lequel l'appareil est apte à fonctionner.

5. Appareil de multiplexage selon la revendication 1, lorsque l'appareil (102) se trouve dans un mode de multiplexage de radiofréquence (130, Dc-Mux) dans un sens de transmission, un ou plusieurs signaux de radiofréquence transmis étant agencés de façon à passer à travers l'appareil (102) entre, ou à partir d'une pluralité de ports de connexion de canal (24, 24', 26, 26', 110, 112, 114, 132, P1, P2, P3, P4, P5, P6, P7, P8) vers un port de connexion de sortie commun ou individuel (28, 28', 108, 134, C1, C2) ; lorsque l'appareil (102) se trouve dans un mode de démultiplexage de radiofréquence (128, Dc-Demux) dans un sens de transmission, un ou plusieurs signaux de radiofréquence transmis étant agencés de façon à passer à travers l'appareil (102) entre, ou à partir d'un port de connexion d'entrée commun ou individuel (28, 28', 108, 134, C1, C2) vers une pluralité de ports de connexion de canal (24, 24', 26, 26', 110, 112, 114, 132, P1, P2, P3, P4, P5, P6, P7, P8).

6. Appareil de multiplexage selon la revendication 4, une fois que le moyen de contrôle (104, 104') a déterminé le mode de fonctionnement en radiofréquence de l'appareil (102), le type de connexions, l'orientation de l'appareil (102) dans un agencement de site à cellule, l'emplacement de montage de l'appareil (102) dans un agencement de site à cellule et/ou l'équipement auquel l'appareil (102) a été monté, le moyen de contrôle (104, 104') étant agencé de façon à valider ou invalider un ou plusieurs trajets de dérivation (36, 36', 106, 106') dans l'appareil (102).

7. Appareil de multiplexage selon la revendication 1, une fois que le moyen de contrôle (104, 104') a déterminé que l'appareil (102) se trouve dans un mode de multiplexage de radiofréquence (130, Dc-Mux) dans un sens de transmission, seulement un port de la pluralité de ports de connexion de canal (24, 24', 26, 26', 110, 112, 114, 132, P1, P2, P3, P4, P5, P6, P7, P8) ayant besoin de fournir une énergie en courant continu et/ou un ou plusieurs signaux de contrôle à travers l'appareil (102), et le moyen de contrôle (104, 104') étant agencé de façon à sélectionner un trajet de dérivation (36, 36', 106, 106') connecté entre une portion de connexion de canal (24, 24', 26, 26', 110, 112, 114, 132, P1, P2, P3, P4, P5, P6, P7, P8) et un port de connexion commun (28, 28', 108, 134, C1, C2), et étant agencé de façon à valider ce trajet de dérivation (36, 36', 106, 106'), et à invalider n'importe quel autre trajet de dérivation (36, 36', 106, 106') dans l'appareil (102).

8. Appareil de multiplexage selon la revendication 1, si un courant continu, une tension ou une valeur électrique est détecté au niveau d'une pluralité de ports de connexion de canal (24, 24', 26, 26', 110, 112, 114, 132, P1, P2, P3, P4, P5, P6, P7, P8) durant une procédure initiale de préparation de mode opérationnel, seulement un des ports de connexion de canal (24, 24', 26, 26', 110, 112, 114, 132, P1, P2, P3, P4, P5, P6, P7, P8) étant sélectionné en tant que source d'énergie en courant continu et/ou source de signal de contrôle ou de signal de contrôle « Antenna Interface Standards Group ».

9. Appareil de multiplexage selon la revendication 8, le moyen de contrôle (104, 104') identifiant le port de connexion de canal (24, 24', 26, 26', 110, 112, 114, 132, P1, P2, P3, P4, P5, P6, P7, P8) avec la priorité la plus élevée sur la base d'un ensemble prédéfini de règles, le trajet de dérivation (36, 36', 106, 106') associé au port sélectionné étant alors validé et les trajets de dérivation (36, 36', 106, 106') associés aux autres ports non sélectionnés étant invalidés.

10. Appareil de multiplexage selon la revendication 1, cette une ou plusieurs valeurs électriques détectée(s) par le moyen de contrôle (104, 104') incluant n'importe quel élément, ou n'importe quelle combinaison des éléments parmi un courant électrique, une tension, une impédance électrique ou une résistance électrique.

11. Appareil de multiplexage selon la revendication 1, le moyen de contrôle (104, 104') étant agencé de façon à contrôler la validation ou l'invalidation d'un ou de plusieurs trajets de dérivation (36, 36', 106, 106') dans l'appareil (102) lorsqu'une valeur électrique est mesurée au niveau d'un port de connexion commun (28, 28', 108, 134, C1, C2) et/ou d'un port de connexion de canal (24, 24', 26, 26', 110, 112, 114, 132, P1, P2, P3, P4, P5, P6, P7, P8) associé au-dessus ou en dessous d'une valeur seuil prédéterminée.

12. Appareil de multiplexage selon la revendication 1, le moyen de contrôle (104, 104') étant agencé de façon à invalider un ou plusieurs trajets de dérivation (36, 36', 106, 106') si un court-circuit est détecté au niveau d'un ou de plusieurs ports de connexion de canal (24, 24', 26, 26', 110, 112, 114, 132, P1, P2, P3, P4, P5, P6, P7, P8) et/ou ports de connexion communs (28, 28', 108, 134, C1, C2) associé(s), ou le moyen de contrôle (104, 104') étant agencé de façon à valider un ou plusieurs trajets de dérivation (36, 36', 106, 106') si un court-circuit n'est pas détecté au niveau d'un ou de plusieurs ports de connexion de canal (24, 24', 26, 26', 110, 112, 114, 132, P1, P2, P3, P4, P5, P6, P7, P8) et/ou ports de connexion communs (28, 28', 108, 134, C1, C2) associé(s) lorsqu'il se trouve dans un mode de démultiplexage (128, Dc-Demux).

13. Appareil de multiplexage selon la revendication 1, le moyen de contrôle (104, 104') incluant un ou plusieurs commutateurs électriques (116, 118, 120, 136, 138, 140) qui peuvent être déplacés entre un état « on » (en circuit) pour valider un trajet de dérivation (36, 36', 106, 106') et un état « off » (hors circuit) pour invalider un trajet de dérivation (36, 36', 106, 106').

14. Appareil de multiplexage selon la revendication 1, chaque port de connexion de canal (24, 24', 26, 26', 110, 112, 114, 132, P1, P2, P3, P4, P5, P6, P7, P8) et/ou port de connexion commun (28, 28', 108, 134, C1, C2) possédant ou employant un mécanisme pour déterminer si l'impédance électrique d'un système ou appareil externe se situe au sein d'une gamme prédéterminée, et le moyen de contrôle (104, 104') étant agencé de façon à subir une phase de vérification durant le fonctionnement, en vertu de quoi le moyen de contrôle (104, 104') est agencé de façon à commuter une source de courant constant vers le port de connexion et la tension au niveau du port est surveillée, le niveau de tension détecté étant indicatif de l'impédance du système ou appareil externe et étant utilisé par un algorithme de détection de port pour déterminer si le trajet de dérivation (36, 36', 106, 106') associé à ce port peut être, ou devrait être, validé.

15. Procédé d'utilisation d'un appareil de multiplexage (102), ledit appareil de multiplexage incluant au moins un port de connexion commun (28, 28', 108, 134, C1, C2) et au moins un port de connexion de canal (24, 24', 26, 26', 110, 112, 114, 132, P1, P2, P3, P4, P5, P6, P7, P8), ledit procédé incluant les étapes consistant à connecter un ou plusieurs trajets de radiofréquence entre ledit au moins un port de connexion commun (28, 28', 108, 134, C1, C2) et ledit au moins un port de connexion de canal (24, 24', 26, 26', 110, 112, 114, 132, P1, P2, P3, P4, P5, P6, P7, P8) pour transmettre et/ou recevoir un ou plusieurs signaux de radiofréquence le long de ceux-ci, à connecter au moins un trajet de dérivation (36, 36', 106, 106') prévu entre ledit au moins un port commun (28, 28', 108, 134, C1, C2) et au moins un desdits ports de canal (24, 24', 26, 26', 110, 112, 114, 132, P1, P2, P3, P4, P5, P6, P7, P8) pour le passage de l'énergie en courant continu et/ou un ou plusieurs signaux de contrôle le long de ceux-ci, à utiliser des moyens de contrôle (104, 104') prévus dans l'appareil (102), ou associés à ce dernier, pour détecter une ou plusieurs valeurs électriques au niveau de, ou associées à, un ou plusieurs des ports communs (28, 28', 108, 134, C1, C2) et/ou des ports de canal (24, 24', 26, 26', 110, 112, 114, 132, P1, P2, P3, P4, P5, P6, P7, P8), et à contrôler afin de savoir si ledit au moins un trajet de dérivation (36, 36', 106, 106') est validé ou invalidé en fonction de ladite une ou plusieurs valeurs électriques détectées, **caractérisé en ce que** le moyen de contrôle (104, 104') détecte lequel des ports de connexion communs (28, 28', 108, 134, C1, C2) et/ou des ports de connexion de canal (24, 24', 26, 26', 110, 112, 114, 132, P1, P2, P3, P4, P5, P6, P7, P8) possède un courant continu ou une tension qui est présent au niveau du port, et cas dans lequel s'il est trouvé que le port de connexion commun (28, 28', 108, 134, C1, C2) possède un courant continu ou une tension qui est présent, le moyen de contrôle (104, 104') détermine que l'appareil est en train de fonctionner dans un mode de démultiplexage (128, Dc-Demux) dans un sens de transmission ou est localisé au niveau d'une partie supérieure d'un mât (2), et cas dans lequel s'il est trouvé qu'un ou plusieurs des ports de connexion de canal (24, 24', 26, 26', 110, 112, 114, 132, P1, P2, P3, P4, P5, P6, P7, P8) possède/possèdent un courant continu ou une tension qui est présent, le moyen de contrôle (104, 104') détermine que l'appareil est en train de fonctionner dans un mode de multiplexage (130, Dc-Mux) dans un sens de transmission ou est positionné au niveau d'une base d'un mât (2).
